# FASCICULE DE BREVET EUROPEEN

(11) **EP 3 485 451 B1**
(45) Date de publication et mention de la délivrance du brevet: **03.08.2022**
(21) Numéro de dépôt: 17739269.3
(22) Date de dépôt: 12.07.2017
(51) Int. Cl.: G06Q 20/38, G06F 21/62, G06Q 30/02, G06Q 30/06

(54) **PROCÉDÉ DE TRAITEMENT D'AU MOINS UNE DONNÉE DE MOYEN DE PAIEMENT, TERMINAL DE PAIEMENT ET PROGRAMME D'ORDINATEUR CORRESPONDANT**
VERFAHREN ZUR VERARBEITUNG VON MINDESTENS EINEM ZAHLUNGSMITTELDATENSTÜCK, ZAHLUNGSENDGERÄT UND ZUGEHÖRIGES COMPUTERPROGRAMM
METHOD FOR PROCESSING AT LEAST ONE PIECE OF PAYMENT MEANS DATA, PAYMENT TERMINAL AND CORRESPONDING COMPUTER PROGRAM

(30) Priorité: 12.07.2016 FR 1656692
(43) Date de publication de la demande: 22.05.2019
(73) Titulaire: Banks and Acquirers International Holding, 75015 Paris (FR)
(72) Inventeur: QUENTIN, Pierre, 95880 Enghien Les Bains (FR)
(74) Mandataire: Vidon Brevets & Stratégie
(86) Numéro de dépôt international: PCT/EP2017/067648
(87) Numéro de publication internationale: WO 2018/011322

(56) Documents cités:
- WO-A1-2015/044693
- US-A1- 2014 222 668
- US-A1- 2015 088 752

## Description

### 1. Domaine

L'invention se rapporte au domaine du traitement récurent de données anonymisées. La technique se rapporte plus particulièrement à la gestion récurrente de données de clientèle anonymisées, dans le cadre d'un traitement de programmes de fidélisation.

### 2. Art Antérieur

De tous temps, la fidélisation d'une clientèle a été, pour un commerçant, un moyen de s'assurer des revenus réguliers, et donc de développer et de pérenniser son activité. Depuis plusieurs années, cependant, on constate qu'il subsiste deux grands types de technologies permettant de s'assurer une certaine fidélité d'une clientèle. Le premier type, le plus basique, réside dans l'édition papier : il s'agit typiquement de la carte de fidélité, tamponable ou non, permettant de s'assurer, lors d'un passage en caisse, l'octroi d'un ou plusieurs tampons en fonction par exemple du montant de son achat. La carte de fidélité tamponable est de temps en temps couplée à la transmission, généralement par courrier papier, de coupons de réduction ou de coupons de fidélité aux clients.

Le deuxième type, le plus évolué, consiste à utiliser à plein les solutions technologiques de communication existantes. Ce deuxième type s'appuie par exemple sur une la carte de fidélité associée à un numéro unique (par exemple un identifiant), ce numéro unique étant utilisé de manière extensive, avec les coordonnées du client (adresse email, numéro de téléphone, réseau sociaux) pour proposer à celui-ci, via divers canaux de communication, non seulement une gestion de programmes de fidélité mais également une transmission d'offres commerciales et de coupons de réduction. Ainsi, la transmission de ces informations est réalisée par courrier électronique, par SMS ou encore en réalisant le "l'in-app messaging", terme provenant de l'anglais et décrivant une technologie consistant à transmettre, à une application installée sur un téléphone intelligent (également appelé smartphone), des notifications. Plus récemment, l'intégration de la gestion de la fidélité dans les smartphones a été améliorée grâce aux wallets (de l'anglais pour "portefeuille").

Ainsi, l'industrie a connu une quantité considérable de publications se rapportant à l'usage des composant portefeuilles mobiles tels que "Google Wallet"^{™} et le "Passbook" ^{™} d'Apple^{™}. Définies comme des solutions mobiles efficaces pour fournir des récompenses de fidélisation à de la clientèle, il n'y a aucune question à se poser pour savoir pourquoi ces applications sont de plus en plus populaires.

Ainsi, sous la pression d'utilisateurs toujours plus désireux de disposer de solutions simples et pratiques, les grands acteurs du commerce se sont mobilisés pour fournir des solutions convenant à leurs clients. Aux États Unis, Walgreens^{™} fait office de modèle à suivre pour ces grands groupes de commerce. L'adoption de ces technologies, cependant, s'est faite de manière lente et graduelle. Le déploiement de telles solutions de fidélisation de clientèle sont complexes et (très) couteuses. Par ailleurs, bien que désireux de disposer de ces services, les utilisateurs n'en sont pas moins inquiets des problématiques de sécurités qui peuvent se poser, particulièrement lorsque des données de moyen de paiement sont associées aux données de fidélisation, comme cela est de plus en plus souvent le cas.

Il en résulte qu'une part importante des commerçants est aujourd'hui éloignée de ces solutions modernes de gestion de la fidélité : il s'agit de la première catégorie de commerçants présentée, celle des petits commerçants de proximité, indépendants, qui ne sont pas affiliés à de grands groupes de commerce. En effet, les montants à investir pour obtenir des solutions de fidélisation modernes vont bien au-delà des capacités financières des commerçants. Ces commerçants utilisent donc toujours, en majorité, la technologie traditionnelle consistant à munir le client d'une carte de fidélité "papier", généralement à tamponner. Pour combler ces manques, un certain nombre d'éditeurs ou de vendeurs de solutions ont vu le jour. Ils proposent aux commerçants de gérer, par l'intermédiaire de leurs sites web, des campagnes de "marketing" qui exploitent certaines possibilités offertes par les "wallet" des smartphones. Essentiellement, ces éditeurs proposent des solutions de "transmission" de coupons, via des techniques de transmission "sans fil", permettant au commerçant de propager de manière ponctuelle, des offres de réductions. D'autres éditeurs disposent d'offres plus complètes. Ces offres nécessitent cependant de disposer d'informations personnelles sur les clients (comme des adresses de courrier électroniques, des numéros de téléphone). Or de telles informations ne sont pas nécessairement à disposition du commerçant de proximité.

Il existe donc un besoin de fournir, à ce type de commerçant, une solution de fidélisation qui d'une part permette de tirer parti des possibilités techniques offertes par les terminaux de communications d'une part et d'autre part qui soit simple et peu couteuse pour le commerçant.

### 3. Résumé

L'invention ne pose pas ces problèmes de l'art antérieur. Plus particulièrement, l'invention apporte une solution simple à la problématique préalablement identifiée. En effet, la présente technique permet de gérer, de manière simple et efficace des politiques de fidélité propre au commerçant indépendant, sans qu'il soit nécessaire, pour celui-ci, de disposer d'information extensives sur ses clients et sans qu'il soit nécessaire de s'abonner à des solutions tiers couteuses.

Plus particulièrement, la présente technique porte sur une méthode de traitement, au sein d'un terminal de paiement, d'une donnée représentative d'un moyen de paiement, ladite méthode comprenant, une étape d'obtention, au moment du paiement effectué à l'aide du terminal de paiement, d'une donnée représentative du moyen de paiement utilisé et une étape comparaison de cette donnée représentative du moyen de paiement utilisé avec une pluralité de données du même type précédemment obtenue.

Plus particulièrement, dans un mode de réalisation, la donnée représentative du moyen de paiement utilisé est obtenue à la suite d'une mise en œuvre d'un traitement spécifique au sein d'un processeur sécurisé du terminal de paiement.

Selon une caractéristique particulière, la donnée représentative du moyen de paiement utilisé est transmise, par l'intermédiaire d'une interface dédiée, à un processeur de traitement généraliste du terminal de paiement. Il en résulte que ladite étape de comparaison de cette donnée représentative du moyen de paiement utilisé avec une pluralité de données du même type précédemment obtenue est réalisée au niveau du processeur de traitement généraliste.

En sus de la donnée représentative du moyen de paiement, le processeur de traitement généraliste est également en mesure d'obtenir divers données relatives à la transaction qui sont par exemple le montant, la date et l'heure.

Plus particulièrement, la présente technique se rapporte à un procédé de traitement d'au moins une donnée de moyen de paiement, procédé mis en œuvre au sein d'un terminal de paiement comprenant un processeur de traitement sécurisé et une mémoire de traitement sécurisé. Un tel procédé comprend :
- une étape d'obtention d'au moins une donnée représentative d'un moyen de paiement utilisé pour effectuer une transaction, dite donnée de moyen de paiement ;
- une étape d'anonymisation de ladite donnée de moyen de paiement, délivrant une donnée d'identification anonyme courante ;
- une étape de transmission de ladite donnée d'identification anonyme courante à une application de traitement de données de fidélisation ;

Ainsi, il est possible de réaliser une gestion de la fidélisation de clients de petits commerce, et ce même sans disposer d'une infrastructure de gestion de fidélité importante et de manière anonyme (c'est-à-dire sans requérir d'information personnelle de la part du client). La compréhension du caractère anonyme de cette fidélisation est primordiale, car aucun autre système n'offre ce type de gestion de fidélisation.

Selon une caractéristique particulière, l'étape de transmission de ladite donnée d'identification anonyme à l'application de traitement de donnée de fidélisation s'accompagne de la transmission d'une donnée représentative d'un montant de transaction.

Ainsi, l'application de traitement de donnée de fidélisation est en mesure de gérer de manière simple la politique de fidélisation du commerçant : soit un cumul des montants d'achats, soit un cumul du nombre d'achats, soit une combinaison de ces deux cumuls, ou toute autre politique de fidélisation.

Selon un mode de réalisation particulier, l'application de traitement de donnée de fidélisation est exécutée sur le terminal de paiement et l'étape de transmission de la donnée d'identification anonyme courante comprend la transmission de la donnée d'identification anonyme à un processeur de traitement généraliste du terminal de paiement.

Ainsi, le processeur de traitement généraliste est à même de réaliser des traitements plus gourmand en termes de temps de calcul et de mémoire consommée. Il peut notamment effectuer des recherches plus rapides dans des bases de données ou des structures de fichiers complexes.

Selon un mode de réalisation particulier, l'étape d'anonymisation de ladite donnée de moyen de paiement comprend :
- une étape d'application, par le processeur de traitement sécurisé d'un traitement de haschage ; et
- une étape optionnelle d'application, par le processeur de traitement sécurisé, d'un traitement cryptographique.

Ainsi, il n'est pas possible d'obtenir les données de paiement à partir de l'identifiant. On assure ainsi que les données de paiement ne seront pas utilisées par la suite. On assure également le caractère unique de l'identifiant. De manière complémentaire, le traitement cryptographique met en œuvre une clé publique du terminal de paiement : dès lors il n'est pas possible qu'un même utilisateur dispose d'un identifiant identique auprès de deux commerçant différents. On assure ainsi une préservation de l'anonymat des données échangées.

Selon un mode de réalisation particulier, le procédé comprend le traitement de données de fidélisation par l'application de traitement de donnée de fidélisation, ledit traitement comprenant :
- une étape de recherche, au sein d'une structure de données, d'une donnée d'identification anonyme de référence correspondant à la donnée d'identification anonyme courante ; et
- lorsque l'étape de recherche délivre un résultat positif, une étape de mise à jour d'une donnée de fidélisation associée à la donnée d'identification anonyme courante ;
- lorsque l'étape de recherche délivre un résultat négatif, une étape de création, au sein de la structure de données, d'une donnée de fidélisation associée à la donnée d'identification anonyme courante.

Ainsi, le traitement mis en œuvre est simple et efficace.

Selon un mode de réalisation particulier, ledit procédé comprend une étape de transmission de données de fidélisation comprenant :
- une étape de transmission, au processeur de traitement sécurisé, de la donnée d'identification anonyme courante et d'au moins une donnée représentative de fidélisation ;
- une étape de création, par le processeur de traitement sécurisé, d'un conteneur comprenant un identifiant de conteneur et des données dérivées de la donnée d'identification anonyme courante et de ladite au moins une donnée représentative de fidélisation ;
- une étape de transmission, à un terminal de communication, dudit conteneur.

Selon une caractéristique particulière, ladite étape de transmission de donnée de fidélisation comprend :
- une étape de réception, en provenance du terminal de communication, d'une donnée d'identification dudit terminal de communication ; et
- une étape de mise à jour d'un enregistrement d'une structure de donnée de fidélisation associée à la donnée d'identification anonyme courante, comprenant l'association de la donnée d'identification dudit terminal de communication avec la donnée d'identification anonyme courante.

Selon un mode de réalisation particulier, le procédé comprend en outre, postérieurement à l'étape de transmission de la donnée d'identification anonyme courante, une étape d'impression d'un reçu de paiement comprenant au moins une donnée de fidélisation.

Ainsi, le terminal de paiement peut par exemple imprimer une carte de fidélité déjà tamponnée qui fait en quelque sorte office de preuve de fidélité pour le client (comme s'il disposait lui-même d'une carte de fidélité).

Il est également proposé un terminal de paiement, terminal du type comprenant un processeur de traitement sécurisé et une mémoire de traitement sécurisé. Un tel terminal comprend des moyens de mise en œuvre de la technique décrite précédemment. Un tel terminal comprend notamment :
- des moyens d'obtention d'au moins une donnée représentative d'un moyen de paiement utilisé pour effectuer une transaction, dite donnée de moyen de paiement ;
- des moyens d'anonymisation de ladite donnée de moyen de paiement, délivrant une donnée d'identification anonyme courante ;
- des moyens de transmission de ladite donnée d'identification anonyme courante à une application de traitement de donnée de fidélisation.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée ;
- la figure 2 présente la transmission d'un « pass » de fidélité à un terminal de communication ;
- la figure 3 décrit un terminal de paiement selon un mode de réalisation particulier.

### 5. Description

### 5.1. Principe général

Le principe général de la technique proposée consiste à effectuer un traitement, au sein d'un terminal de paiement, de données dites de fidélisation. Un tel traitement, dont la nature n'est pas administrative ou commerciale (comme cela est démontré par la suite), permet au commerçant de gérer de manière fiable et efficace, les données impliquant les moyens de paiement des utilisateurs : le traitement de ces données doit être effectué de manière sécurisée afin qu'elles (les données) ne puissent pas faire l'objet d'un vol ou d'une usurpation. La technique présentée ci-après, comme cela a été indiqué précédemment, part du constat que les petits commerçants (boulangers, fleuristes, garagistes indépendants, etc.) ne disposent pas de plateformes commerciales de gestion de la fidélité de leur clients, comme par exemple les grandes chaines de magasins.

Pour pallier ces problèmes, il est proposé de gérer un programme de fidélité adapté, par l'intermédiaire du terminal de paiement du commerçant, ce terminal présentant des caractéristiques qui sont utilisées pour effectuer un traitement fiable et sécurisé de ces données.

Une telle gestion pose deux problèmes techniques importants que sont *d'une part* le traitement des données par le terminal de paiement et *d'autre part* la relative absence de données à disposition du commerçant pour identifier ses clients. Pour illustrer ce deuxième problème, par exemple, un boulanger sert de manière régulière des clients qu'il reconnaît, mais qu'il ne connaît pas. Éventuellement, le boulanger peut, pour des clients fidèles, connaitre le nom, le prénom ou encore le numéro de téléphone de ceux-ci (par exemple lorsqu'ils passent une commande pour un produit précis). En revanche, il est plus rare qu'il connaisse son adresse ou encore son adresse de courrier électronique. Le problème auquel est confronté le commerçant tient également au fait que bien que les clients soient généralement satisfaits de la relation qu'ils entretiennent avec leurs commerçant de proximité, ils sont cependant nettement moins enclins à confier à celui-ci des données personnelles ; ceci est logique car les clients entretiennent déjà une relation de proximité avec le commerçant et n'ont pas nécessairement envie que le commerçant en sache d'avantage sur leurs vies privées. Ainsi, paradoxalement, c'est la proximité du commerçant avec sa clientèle qui est son principal obstacle à l'élaboration de programme de fidélisation efficace. C'est pour cette raison que les cartes de fidélité se présentent souvent sous forme papier et sont anonymes.

Pour pallier ces deux problèmes techniques résultants eux-mêmes des précédents problèmes exposés, les inventeurs ont eu l'idée de se baser sur des données d'identification anonymes pour effectuer un traitement de données de programme de fidélité au sein d'un terminal de paiement. Plus particulièrement, une donnée d'identification anonyme est une donnée qui d'une part ne permet pas de connaître l'identité de l'utilisateur dont elle provient et d'autre part qui est suffisamment singulière pour représenter un identifiant unique de l'utilisateur. Plus particulièrement, dans le cadre de la présente la donnée d'identification anonyme d'un utilisateur résulte d'un traitement, réalisé par le terminal de paiement du commerçant. Dans un mode de réalisation spécifique, un tel traitement est réalisé sur la base d'au moins une donnée présente sur le moyen de paiement utilisé par le client. Dans un mode de réalisation un tel traitement est réalisé sur la base d'au moins une donnée de la carte bancaire utilisée par le client pour effectuer son achat : numéro de carte, date de validité, nom, prénom, code de vérification visuel.

En effet, les inventeurs ont constaté qu'il est de plus en plus fréquent d'utiliser une carte bancaire pour effectuer des paiements auprès de commerçants, et ce même pour de faibles montants. Par exemple, avec le développement du paiement sans contact, le paiement d'articles ou de services de faibles valeurs (par exemple inférieur à un plafond donné, tel que 20 €) est très fréquent. Par ailleurs, pour le paiement d'articles ou de services d'un montant plus conséquent, la carte bancaire est également le mode de paiement prépondérant. Or, les données qui sont comprises dans la carte de paiement peuvent autant être obtenues sans contact qu'avec contact (insertion traditionnelle de la carte à puce dans le lecteur de carte à puce). Il est donc possible, quelle que soit la technologie utilisée pour effectuer le paiement, de dériver une seule et même donnée d'identification anonyme à partir de ces technologies de paiement. Il en est de même lorsque seule la piste magnétique de la carte est utilisée. Ainsi, une telle donnée peut par exemple être obtenue à partir du numéro de carte bancaire (également appelé PAN) dans la littérature. Un traitement, par exemple un traitement cryptographique peut permettre d'obtenir, à partir de cette donnée, une donnée d'identification anonyme. Plus particulièrement, un algorithme de hachage peut être mis en œuvre pour délivrer une donnée d'identification anonyme. Cet algorithme de hachage peut être couplé à un algorithme de chiffrement pour délivrer un code d'authentification (MAC) faisant office de donnée d'identification anonyme. Une signature peut également convenir à l'anonymisation des données.

Cette donnée d'identification anonyme est alors utilisée pour effectuer une recherche, au sein du terminal de paiement, d'une correspondance avec une donnée d'identification anonyme identique. Lorsque cette recherche délivre un résultat positif, une donnée de fidélité est mise à jour. Lorsque cette recherche délivre un résultat négatif, une nouvelle entrée est créée et une donnée de fidélité est insérée. La donnée de fidélité peut représenter un nombre d'achats, ou encore une valeur totale d'achat.

Afin de sécuriser l'ensemble du processus de gestion de la fidélisation et éviter que les données d'identification anonymes puissent être utilisées pour obtenir frauduleusement des données non anonymisées, la technique proposée réalise une anonymisation en utilisant le processeur cryptographique du terminal de paiement (également appelé processeur de traitement sécurisé, ou encore processeur sécurisé). Ce processeur cryptographique permet d'obtenir une donnée d'identification anonyme en toute sécurité, et ce à partir d'un ensemble de données non anonymisées qui entrent en possession du terminal lors de la réalisation d'une transaction. En effet, les inventeurs ont eu l'idée de réaliser le traitement d'anonymisation au moment de la réalisation de la transaction elle-même : lors du traitement de la transaction le terminal de paiement entre en possession des données de la carte bancaire pour effectuer cette transaction. Au minimum, il connaît le numéro de carte bancaire et la date de validité de celle-ci. Dès lors, pour mettre en œuvre de manière simple et sécurisé un traitement de données de fidélité, il est plus sécurisant et rapide de réaliser une création de la donnée d'identification anonyme au moment de la transaction. Dans les faits, cette création est réalisée postérieurement à la confirmation de la transaction, sur la base des données restant en possession du terminal (donc sur la base des données que le terminal a pris soin de conserver dans la mémoire sécurisée). Dans au moins un mode de réalisation, cette création est par exemple mise en œuvre en demandant (à l'aide de requête), à la carte, la signature ou l'authentification de données. La requête est transmise par le terminal de paiement. La carte effectue un traitement cryptographique sur la base de données qu'elle possède. Le terminal de paiement effectue une vérification des données « signées » reçues de la carte.

De manière complémentaire, le traitement cryptographique eut faire intervenir une clé publique du terminal de paiement : la donnée d'identification anonyme est alors unique pour le terminal de paiement en question ; Il n'est donc pas possible qu'un utilisateur (client) dispose d'une même donnée d'identification anonyme chez deux commerçants différents (dont le terminal implémenterait la présente technique).

Le traitement cryptographique est ainsi réalisé à l'abri des applications tierces qui s'exécutent sur le processeur de traitement général, non sécurisé. Dès lors, grâce à cette technique, il n'est pas possible, pour une application frauduleuse, de récupérer les données de cartes bancaires des utilisateurs. Les données d'identification anonymes sont transmises à une application de fidélité qui s'exécute sur le processeur de traitement général du terminal de paiement. Ainsi, cette application est en mesure de réaliser des opérations de gestion de fidélité de manière efficace. En effet, l'une des caractéristiques du processeur de traitement général du terminal de paiement est de pouvoir réaliser des calculs et des traitements de manière beaucoup plus extensive que le processeur sécurisé, qui de par sa nature, dispose de moins de puissance de calcul et de moins de mémoire disponible.

Une caractéristique complémentaire, comme cela est décrit par la suite, consiste à transmettre ces données de fidélité, à destination du client. En effet, en fonction des modes de réalisation mis en œuvre, il peut être intéressant de proposer au client, une expérience utilisateur supplémentaire. Pour se faire, en sus de la création de données anonymisées de gestion de fidélité, il est proposé une technique de transmission d'une partie de ces données qui permet au commerçant d'interagir de manière moderne avec sa clientèle.

Concrètement, les inventeurs proposent deux types de techniques de transmission de ces données.

La première technique est basique : elle consiste à délivrer l'information sur le ticket de paiement imprimé par le terminal de paiement. D'un point de vue général, ceci ne présente pas une innovation majeure en termes de traitement des données. En revanche, afin de ne pas modifier de manière trop importante les habitudes des clients, l'information affichée est modifiée. En effet, traditionnellement, par exemple pour les grandes surfaces ou les enseignes commerciales importantes, les données de fidélité sont en réalité constituées d'un montant, généralement un montant cumulé, tenant compte de toutes les promotions auxquelles le client a bénéficié. Ce montant est inscrit en euros (€), en dollars ($) ou dans une autre monnaie. Les inventeurs proposent deux variantes pour notifier la fidélité, variantes qui sont sensiblement différentes de la simple inscription d'un montant.

La première variante consiste à imprimer une représentation d'une carte de fidélité sur le ticket. Cela permet d'imiter la traditionnelle carte de fidélité à tamponner et permet de constater immédiatement le bénéfice obtenu par le client. Cette impression est simple à réaliser et à l'avantage d'être compréhensible par tout un chacun. Plus particulièrement, lorsque la carte est une carte à « tampon », l'impression est réalisée en imprimant des tampons représentatifs des achats faits chez le commerçant.

La deuxième variante consiste à imprimer un code à barre en deux dimensions (ou QR-Code). Ce code barre comprend d'une part la donnée d'identification anonyme (associée au client au sein du terminal de paiement) et au moins une donnée associée au programme de fidélité du commerçant. De plus, ce code barre en deux dimensions comprend également un identifiant du commerçant. À l'aide de ce code barre l'utilisateur peut effectuer un suivi en ligne de ses offres de fidélités associées aux commerces qu'il fréquente et qui disposent de la présente technique. Un tel suivi est effectué, par exemple, en créant un compte sur une plateforme de suivi, en ligne, en se connectant à ce compte et en scannant le code barre en deux dimensions. L'utilisation de la plateforme de consultation (en ligne) peut être effectuée soit à partir d'un ordinateur de type PC, soit à partir d'un terminal de communication de type smartphone ou tablette (avec par exemple une application de gestion de la fidélité, de type FidMe^{™}).

La deuxième technique est présentée postérieurement et est basée sur une interaction entre le terminal de paiement et un terminal de communication de l'utilisateur (smartphone).

De manière complémentaire, le commerçant peut demander, à la fin de la transaction, que le client fournisse un nom, un prénom ou les deux afin d'identifier le client de manière plus conviviale. Ceci est cependant optionnel et le principe général de la technique décrite ne nécessite pas cette information.

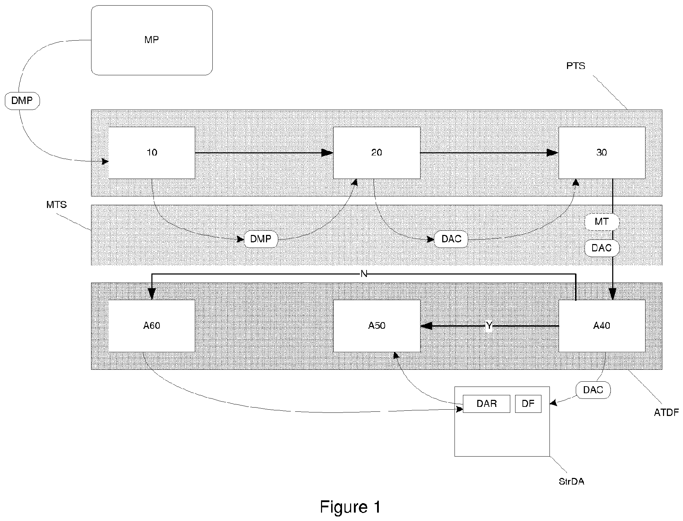

La figure 1 décrit les différentes étapes mises en œuvre dans le cadre de la présente. Le procédé de traitement d'au moins une donnée de moyen de paiement, qui est mis en œuvre au sein d'un terminal de paiement (TP) comprenant un processeur de traitement sécurisé (PTS) et une mémoire de traitement sécurisé (MTS), procédé caractérisé en ce qu'il comprend :
- une étape d'obtention (10) d'au moins une donnée représentative d'un moyen de paiement utilisé (MP) pour effectuer une transaction, dite donnée de moyen de paiement (DMP) ; comme explicité, il peut s'agir d'un numéro de carte par exemple ;
- une étape d'anonymisation (20) de ladite donnée de moyen de paiement, délivrant une donnée d'identification anonyme courante (DAC) ; comme explicité, cette donnée peut être transformée par le terminal de paiement (sou la forme d'un hachage et d'un chiffrement) ;
- une étape de transmission (30) de ladite donnée d'identification anonyme courante (DAC) à une application de traitement de données de fidélisation (ATDF) ; l'application ATDF peut s'exécuter sur un processeur généraliste du terminal de paiement; ce processeur comprend une interface permettant de recevoir des données de la part du processeur sécurisé (PTS).

De manière complémentaire, la transmission de la donnée d'identification anonyme courante (DAC) s'accompagne de la transmission du montant de transaction (MT) afin que ce montant puisse être comptabilisé dans l'application de traitement de données de fidélisation (ATDF).

Les données sont ensuite traitées par l'application de traitement de données de fidélisation (ATDF) et ce traitement comprend notamment :
- une étape de recherche (A40), au sein d'une structure de données (StrDA), d'une donnée d'identification anonyme de référence (DAR) correspondant à la donnée d'identification anonyme courante (DAC) ; et
- lorsque l'étape de recherche délivre un résultat positif, une étape de mise à jour (A50) d'une donnée de fidélisation (DF) associée à la donnée d'identification anonyme courante (DAC) ;
- lorsque l'étape de recherche délivre un résultat négatif, une étape de création (A60), au sein de la structure de données (StrDA), d'une donnée de fidélisation (DF) associée à la donnée d'identification anonyme courante (DAC).

Postérieurement à cette mise à jour ou à cette création, en fonction des modes de réalisation, une phase de communication avec le client est mise en œuvre, afin de lui transmettre des informations de fidélisation (comme cela est présenté précédemment et postérieurement).

### 5.2. Carte de fidélité virtuelle

Outre la méthode de traitement des données anonymisées, telle que présentée précédemment, il est également présenté une technique de transmission de ces données. Cette technique permet tout à la fois : au commerçant de disposer de données de fidélité liées au terminal de paiement qu'il met en œuvre; et aux clients (du commerçant) de disposer de ces données de programme de fidélité.

Pour ce faire, le processeur de sécurité du terminal de paiement est à nouveau mis en œuvre, d'une manière inédite, pour effectuer un lien entre le terminal de paiement et un dispositif de communication dont dispose le client. Par ailleurs, l'environnement sécurisé du terminal de communication (smartphone) du client peut également être utilisé. Plus particulièrement, l'utilisation conjointe de ces ressources cryptographiques permet au client de disposer, au sein de son smartphone, d'une sorte de carte de fidélité virtuelle qui est mise à jour à partir du terminal de paiement.

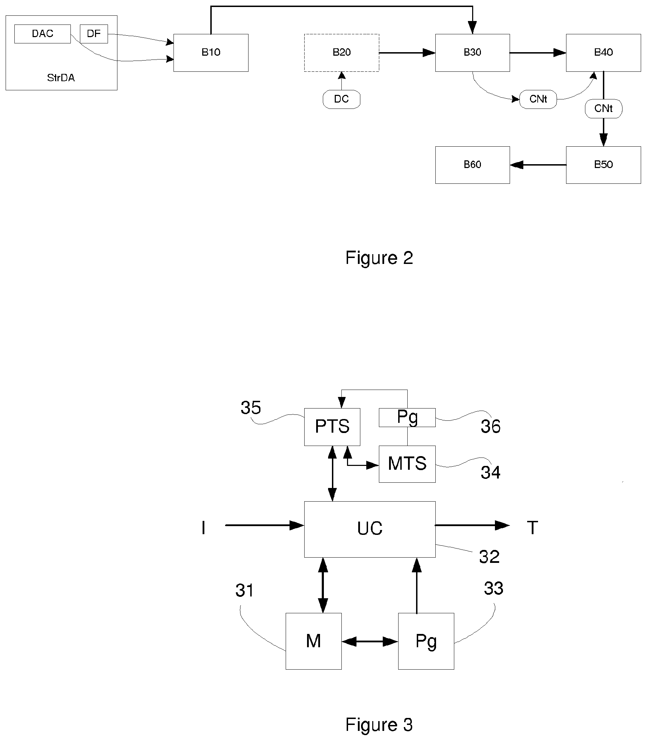

Plus particulièrement, cette technique de transmission de données est explicitée en relation avec la figure 2. À la fin de la transaction de paiement, comme explicité plus haut, l'application de gestion de la fidélité du terminal de paiement a enregistré, dans une structure de données (StrDA) de type base de données ou fichier à plat (Texte ou XML), une association entre une donnée d'identification anonyme (DAC), issue par exemple des moyens de paiement utilisés par le client et une donnée de fidélité (DF). Les inventeurs ont recherché comment en informer le client, de manière simple et efficace.

Pour le faire, les inventeurs ont eu l'idée d'effectuer une transmission de données, par l'intermédiaire d'un canal de communication à disposition du terminal de paiement, vers un terminal de communication (smartphone) du client. Plus particulièrement cette transmission de donnée est réalisée à destination d'un composant spécifique du terminal de communication : le portefeuille sécurisé (également appelé *"Wallet"*). Ce composant est traditionnellement utilisé pour recevoir des données de paiement (cartes de paiement). Les inventeurs ont eu l'idée d'utiliser ce portefeuille pour recevoir les données en provenance du terminal de paiement. Pour ce faire, le terminal de paiement construit un *"Pass".* Un *"Pass"* est traditionnellement un fichier de type *"json"* comprenant un identifiant, du texte, une ou plusieurs images et éventuellement un code barre à une ou deux dimensions. Cependant, pour les besoins de la présente technique, les inventeurs ont eu l'idée de détourner l'usage de ce *"Pass".* En effet, plutôt que de l'utiliser en tant que technique de transport de "valeurs" (c'est par exemple le cas des bons de réduction utilisés dans les *"Pass"*), les inventeurs ont eu l'idée d'utiliser l'image du *"Pass"* comme la représentation de la carte de fidélité à tamponner. Ainsi, on réalise une transmission des données de fidélité en utilisant un moyen de gestion présent sur les smartphones, mais pour afficher une donnée sous une forme plus traditionnelle et compréhensible par le plus grand nombre.

La méthode générale est la suivante :
- l'application de gestion de fidélité, installée sur le terminal de paiement, transmet (B10), au composant sécurisé de ce même terminal de paiement, la donnée d'identification anonyme (DAC) et les données représentatives de la fidélité (DF) (par exemple la donnée de fidélité est un compteur, indiquant un nombre de passage en caisse) ;
- de manière complémentaire, l'application peut également transmettre (B20) un ensemble de données de configurations (DC) (logo, couleurs, textes, données de mise en forme) qui constituent la représentation visuelle d'une carte de fidélité virtuelle;
- le composant sécurisé réceptionne ces données et créé (B30) un fichier de type "Pass", sécurisé : il effectue d'abord une création d'une image représentative d'une carte de fidélité à l'aide d'une part de la donnée de fidélité (DF) et de d'autre part des données de configuration (DC) qu'il a reçue ou qu'il possédait précédemment ; il créé ensuite le conteneur (CNt) pour le pass et chiffre ce conteneur; le conteneur pour le pass comprend un identifiant unique (identifiant unique du "Pass") : cet identifiant est par exemple créé par le processeur sécurisé du terminal de paiement sur la base de la donnée d'identification anonyme ; il s'agit alors d'un identifiant "dérivé"; l'identifiant peut également directement être la donnée d'identification anonyme, bien que cette solution présente un degré de sécurisation inférieur ;
- le terminal de paiement effectue une transmission (B40) de ce conteneur (CNt) au terminal de communication (TC) de l'utilisateur (smartphone); concrètement, cette transmission est réalisée par exemple en effectuant un transfert de fichier NFC ou bluetooth avec le smartphone de l'utilisateur; en fonction de l'interface de transmission utilisée, et de divers paramètres, cette transmission peut être effectuée soit par le processeur sécurisé soit par le processeur de traitement général ; cette transmission s'accompagne, le cas échéant, d'une instruction de suppression de tout "Pass" ayant le même identifiant que celui qui va être transmis ;
- de manière complémentaire, lors de la transmission du "Pass" au smartphone, une communication bidirectionnelle peut être mise en œuvre entre le smartphone et le terminal de paiement : à cette occasion, le terminal de paiement récupère au moins une donnée d'identification du terminal de communication (il peut s'agir par exemple de l'IMEI ou d'une empreinte matérielle du terminal de communication : par exemple une signature issue d'un algorithme de signature appliqué sur une adresse MAC du terminal de communication ou encore directement une adresse MAC) ;
- le terminal de paiement récupère alors, dans ce mode de réalisation, l'identifiant du terminal de communication du client : cet identifiant de terminal est ajouté à l'entrée associée à la donnée d'identification anonyme : l'identifiant de terminal de communication sert alors à deux choses : suppléer l'éventuel changement de moyen de paiement de l'utilisateur et effectuer, à distance, des modifications relatives au "Pass" qui vient d'être installé ;
- le terminal de communication reçoit (B50) le conteneur (Cnt) et identifie (B60), si un « pass » correspondant à ce conteneur existe déjà en mémoire : si c'est le cas, le « pass » existant est supprimé et le nouveau « pass » prend la place de l'ancien.

### 5.3. Utilisation d'autres moyens de paiement

Le principe général a été décrit sur la base de l'utilisation d'une carte de paiement (carte à puce, paiement NFC ou bande magnétique). Cependant, la technique décrite n'est pas limitée à ce type de moyen de paiement. Plus particulièrement, au moins trois autres cas peuvent être pris en compte.
- le premier cas consiste en un paiement réalisé par smartphone, par l'intermédiaire d'une application sans contact (Android Pay^{™}, Apple Pay^{™}, etc.) : ce cas ne diffère pas fondamentalement d'un paiement par carte bancaire, car les mêmes données sont utilisées ; cependant, ce cas présente un avantage dans le cadre de la transmission des données de fidélité au smartphone car il ne nécessite pas que l'utilisateur utilise son smartphone en plus du moyen de paiement ;
- le deuxième cas consiste en un paiement réalisé par chèque : ce cas ne pose pas de difficulté particulière dans la mesure ou un paiement par chèque permet de créer une donnée d'identification anonyme, comme dans le premier cas de figure : cette donnée d'identification anonyme est calculée par exemple en appliquant un algorithme de haschage sur le numéro de compte (IBAN) ; pour le commerçant, postérieurement au paiement, il suffit de saisir, dans l'application de fidélité, sur le clavier du terminal de paiement, les chiffres composants l'IBAN; l'application de fidélité transmet alors ces chiffres au processeur sécurisé du terminal de paiement qui effectue un calcul cryptographique (haschage et éventuellement chiffrement) sur la base de ces chiffres et fournit en retour, à l'application de fidélité, la donnée d'identification anonyme ; en outre avec le chèque, le commerçant dispose du nom et du prénom du client et ces données peuvent également être ajoutées à l'application de fidélité ;
- le troisième cas consiste en un paiement réalisé en liquide; dans ce troisième cas, plusieurs possibilités sont offertes :
   - soit le client a déjà un compte fidélité et donc à déjà été associé à une donnée d'identification anonyme : auquel cas le commerçant effectue une recherche pour tenter d'identifier ce client;
   - soit il s'agit de la première venue du client et il est donc nécessaire de créer une donnée d'identification anonyme ; dans ce cas, la création est basée sur une donnée personnelle du client, qui est donc haschée et chiffrée afin de fourni une donnée d'identification anonyme ; cependant, la donnée obtenue est marquée comme étant temporaire : cela signifie que cette donnée sera amenée à être remplacée, lors d'un prochain achat par une donnée "régulière", provenant d'une carte bancaire ou d'une application de paiement sur smartphone ; la donnée personnelle du client peut être par exemple un couple nom, prénom et/ou un numéro de téléphone.

### 5.4. Application Commerçant

Afin de s'adapter au plus près aux besoins des commerçants, il est également décrit une application de configuration de fidélité, application qui est mise à disposition du commerçant, soit directement sur le terminal de paiement soit sur un serveur distant, auquel le terminal de paiement est en mesure d'accéder.

Cette application de configuration permet au commerçant de fixer les règles de traitement des données de fidélité. Essentiellement, cette application permet de définir le type de carte de fidélité à gérer, les montants de transactions ou d'achats entrant dans le calcul de la fidélité. Elle permet également de définir le type de carte de fidélité virtuelle à gérer (carte à tampon, carte à montant) et de définir les modalités des offres. L'ensemble de ces paramètres est codifié au sein d'un fichier de configuration. Ce fichier de configuration sert de base à l'application de gestion de fidélité qui s'exécute sur le terminal de paiement. Ce fichier est soit directement construit au sein du terminal de paiement soit il est transmis à celui -ci par l'intermédiaire du serveur auquel le terminal de paiement est connecté.

### 5.5. Autres caractéristiques et avantages

On décrit, en relation avec la figure 3, un terminal de paiement mis en œuvre pour gérer, localement, des données de fidélité, selon le procédé décrit préalablement.

Par exemple, le terminal de paiement comprend une mémoire 31 comprend une mémoire tampon, un processeur de traitement général 32, équipée par exemple d'un microprocesseur, et pilotée par un programme d'ordinateur 33, et une mémoire sécurisée 34, un processeur de traitement sécurisé 35, pilotée par un programme d'ordinateur 36, ces unités de traitement mettant en œuvre des procédés de traitement de données tels que décrits précédemment pour effectuer des traitements de données d'identification anonymes, données obtenues à partir des moyens de paiement utilisés par les clients afin d'effectuer leurs achats auprès du commerçant.

À l'initialisation, les instructions de code du programme d'ordinateur 36 sont par exemple chargées dans une mémoire avant d'être exécutées par le processeur de traitement sécurisé 35. Le processeur de traitement 35 reçoit en entrée au moins une donnée représentative d'un moyen de paiement et une donnée représentative d'un montant de transaction. Le processeur de traitement sécurisé 35 met en œuvre les étapes du procédé de traitement des données du moyen de paiement, selon les instructions du programme d'ordinateur 36 pour fournir, au processeur de traitement générale 32, une donnée d'identification anonyme et le cas échéant une donnée représentative du montant de transaction. Le processeur de traitement général 32 effectue un traitement de la donnée pour identifier ou créer, au sein d'une base de données ou d'un fichier, une entrée correspondant à la donnée d'identification anonyme et créer un compte de fidélité au sein du terminal de paiement.

Pour cela, le terminal de paiement comprend, outre la mémoire tampon 31, des moyens de communications, tels que des modules de communication réseau, des moyens de transmission de donnée et des circuits de transmission de données entre les divers composants du terminal de paiement.

Ces moyens peuvent se présenter sous la forme d'un processeur particulier implémenté au sein du terminal de paiement. Selon un mode de réalisation particulier, ce dispositif met en œuvre une application particulière qui est en charge de la réalisation des transactions, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Par ailleurs, le dispositif comprend en outre les moyens de communication en champs proches, dits NFC et des moyens de transmission et de réception de données en provenance de réseaux de communications. Ces moyens se présentent également comme des interfaces de communications permettant d'échanger des données sur des réseaux de communication, des moyens d'interrogations et de mise à jour de base de données.

## Revendications

1. Procédé de traitement d'au moins une donnée de moyen de paiement, procédé mis en œuvre au sein d'un terminal de paiement comprenant un processeur de traitement sécurisé, une mémoire de traitement sécurisée et un processeur de traitement généraliste, procédé **caractérisé en ce qu'**il comprend :
- une étape d'obtention, par le processeur de traitement sécurisé, d'au moins une donnée représentative d'un moyen de paiement utilisé pour effectuer une transaction, dite donnée de moyen de paiement;
- une étape d'anonymisation, par le processeur de traitement sécurisé, de ladite donnée de moyen de paiement, délivrant une donnée d'identification anonyme courante ;
- une étape de transmission de ladite donnée d'identification anonyme courante à une application de traitement de données de fidélisation du le terminal de paiement, ladite application de traitement de données de fidélisation étant exécutée par le processeur de traitement généraliste du terminal de paiement,

2. Procédé de traitement selon la revendication 1, **caractérisé en ce que** l'étape de transmission de ladite donnée d'identification anonyme à l'application de traitement de donnée de fidélisation s'accompagne de la transmission d'une donnée représentative d'un montant de transaction.

3. Procédé de traitement selon la revendication 1, **caractérisée en ce que** l'étape d'anonymisation de ladite donnée de moyen de paiement comprend :
- une étape d'application, par le processeur de traitement sécurisé d'un traitement de haschage ; et
- une étape optionnelle d'application, par le processeur de traitement sécurisé, d'un traitement cryptographique.

4. Procédé de traitement selon la revendication 1, **caractérisé en ce qu'**il comprend le traitement de données de fidélisation par l'application de traitement de donnée de fidélisation, ledit traitement comprenant :
- une étape de recherche, au sein d'une structure de données, d'une donnée d'identification anonyme de référence correspondant à la donnée d'identification anonyme courante ; et
- lorsque l'étape de recherche délivre un résultat positif, une étape de mise à jour d'une donnée de fidélisation associée à la donnée d'identification anonyme courante ;
- lorsque l'étape de recherche délivre un résultat négatif, une étape de création, au sein de la structure de données, d'une donnée de fidélisation associée à la donnée d'identification anonyme courante.

5. Procédé de traitement selon la revendication 1, **caractérisé en ce qu'**il comprend une étape de transmission de données de fidélisation comprenant :
- une étape de transmission, au processeur de traitement sécurisé, de la donnée d'identification anonyme courante et d'au moins une donnée représentative de fidélisation ;
- une étape de création, par le processeur de traitement sécurisé, d'un conteneur comprenant un identifiant de conteneur et des données dérivées de la donnée d'identification anonyme courante et de ladite au moins une donnée représentative de fidélisation ;
- une étape de transmission, à un terminal de communication, dudit conteneur.

6. Procédé de traitement selon la revendication 5, **caractérisé en ce que** ladite étape de transmission de donnée de fidélisation comprend :
- une étape de réception, en provenance du terminal de communication, d'une donnée d'identification dudit terminal de communication ; et
- une étape de mise à jour d'un enregistrement d'une structure de donnée de fidélisation associée à la donnée d'identification anonyme courante, comprenant l'association de la donnée d'identification dudit terminal de communication avec la donnée d'identification anonyme courante.

7. Procédé de traitement selon la revendication 1, **caractérisé en ce qu'**il comprend en outre, postérieurement à l'étape de transmission de la donnée d'identification anonyme courante, une étape d'impression d'un reçu de paiement comprenant au moins une donnée de fidélisation.

8. Terminal de paiement, terminal du type comprenant un processeur de traitement sécurisé, une mémoire de traitement sécurisée et un processeur de traitement généraliste, **caractérisé en ce que** le terminal comprend :
- des moyens d'obtention, processeur de traitement sécurisé, d'au moins une donnée représentative d'un moyen de paiement utilisé pour effectuer une transaction, dite donnée de moyen de paiement ;
- des moyens d'anonymisation, processeur de traitement sécurisé, de ladite donnée de moyen de paiement, délivrant une donnée d'identification anonyme courante ;
- des moyens de transmission de ladite donnée d'identification anonyme courante à une application de traitement de données de fidélisation du le terminal de paiement, ladite application de traitement de données de fidélisation étant exécutée par le processeur de traitement généraliste du terminal de paiement,

9. Produit programme d'ordinateur téléchargeable depuis un réseau de communication et/ou stocké sur un support lisible par ordinateur, **caractérisé en ce qu'**il comprend des instructions de code de programme pour l'exécution d'un procédé de traitement de données transactionnelles selon la revendication 1, lorsqu'il est exécuté sur un terminal de paiement selon la revendication 8.

## Patentansprüche

1. Verfahren zum Verarbeiten mindestens einer Dateneinheit eines Zahlungsmittels, Verfahren, das in einem Zahlungsendgerät umgesetzt wird, umfassend einen gesicherten Verarbeitungsprozessor, einen gesicherten Verarbeitungsspeicher und einen allgemeinen Verarbeitungsprozessor, Verfahren, **dadurch gekennzeichnet, dass** es aufweist:
- einen Schritt des Erhaltens durch den gesicherten Verarbeitungsprozessor mindestens einer Dateneinheit, die für ein Zahlungsmittel repräsentativ ist, das verwendet wird, um eine Transaktion durchzuführen, die Dateneinheit des Zahlungsmittels genannt wird,
- einen Schritt des Anonymisierens der Dateneinheit des Zahlungsmittels durch den gesicherten Verarbeitungsprozessor, der eine aktuelle anonyme Identifikations-Dateneinheit liefert,
- einen Schritt des Übertragens der aktuellen anonymen Identifikations-Dateneinheit an eine Anwendung zum Verarbeiten von Kundenbindungsdaten des Zahlungsendgeräts, wobei die Anwendung zum Verarbeiten von Kundenbindungsdaten von dem allgemeinen Verarbeitungsprozessor des Zahlungsendgeräts ausgeführt wird.

2. Verfahren zum Verarbeiten nach Anspruch 1, **dadurch gekennzeichnet, dass** der Schritt des Übertragens der anonymen Identifikations-Dateneinheit an die Anwendung zum Verarbeiten von Kundenbindungsdaten des Zahlungsendgeräts von dem Übertragen einer Dateneinheit begleitet wird, die für einen Transaktionsbetrag repräsentativ ist.

3. Verfahren zum Verarbeiten nach Anspruch 1, **dadurch gekennzeichnet, dass** der Schritt des Anonymisierens der Dateneinheit des Zahlungsmittels aufweist:
- einen Schritt des Anwendens einer Hashverarbeitung durch den gesicherten Verarbeitungsprozessor und
- einen optionalen Schritt des Anwendens einer kryptografischen Verarbeitung durch den gesicherten Verarbeitungsprozessor.

4. Verfahren zum Verarbeiten nach Anspruch 1, **dadurch gekennzeichnet, dass** es das Verarbeiten von Kundenbindungsdaten durch die Anwendung zum Verarbeiten von Kundenbindungsdaten aufweist, wobei das Verarbeiten aufweist:
- einen Schritt des Suchens innerhalb einer Datenstruktur nach einer anonymen Referenz-Identifikations-Dateneinheit, die der aktuellen anonymen Identifikations-Dateneinheit entspricht, und,
- wenn der Schritt des Suchens ein positives Ergebnis ergibt, einen Schritt des Aktualisierens einer Kundenbindungsdateneinheit, die mit der aktuellen anonymen Identifikations-Dateneinheit verbunden wird,
- wenn der Schritt des Suchens ein negatives Ergebnis ergibt, einen Schritt des Erstellens innerhalb der Datenstruktur einer Kundenbindungsdateneinheit, die mit der aktuellen anonymen Identifikations-Dateneinheit verbunden wird.

5. Verfahren zum Verarbeiten nach Anspruch 1, **dadurch gekennzeichnet, dass** es einen Schritt des Übertragens von Kundenbindungsdaten aufweist, umfassend:
- einen Schritt des Übertragens der aktuellen anonymen Identifikations-Dateneinheit und mindestens einer repräsentativen Kundenbindungsdateneinheit an den gesicherten Verarbeitungsprozessor,
- einen Schritt des Erstellens durch den gesicherten Verarbeitungsprozessor eines Containers, der eine Containerkennung und Daten aufweist, die von der aktuellen anonymen Identifikations-Dateneinheit und von der mindestens einen repräsentativen Kundenbindungsdateneinheit abgeleitet werden,
- einen Schritt des Übertragens des Containers an ein Kommunikationsendgerät.

6. Verfahren zum Verarbeiten nach Anspruch 5, **dadurch gekennzeichnet, dass** der Schritt des Übertragens von Kundenbindungsdaten aufweist:
- einen Schritt des Empfangens einer Identifikations-Dateneinheit des Kommunikationsendgeräts von dem Kommunikationsendgerät und
- einen Schritt des Aktualisierens einer Aufzeichnung einer Kundenbindungsdatenstruktur, die mit der aktuellen anonymen Identifikations-Dateneinheit verbunden ist, umfassend das Verbinden der Identifikations-Dateneinheit des Kommunikationsendgeräts mit der aktuellen anonymen Identifikations-Dateneinheit.

7. Verfahren zum Verarbeiten nach Anspruch 1, **dadurch gekennzeichnet, dass** es ferner nach dem Schritt des Übertragens der anonymen Identifikations-Dateneinheit einen Schritt des Druckens eines Zahlungsbelegs aufweist, umfassend mindestens eine Kundenbindungsdateneinheit.

8. Zahlungsendgerät, Endgerät des Typs, umfassend einen gesicherten Verarbeitungsprozessor und einen gesicherten Verarbeitungsspeicher und einen allgemeinen Verarbeitungsprozessor, **dadurch gekennzeichnet, dass** das Endgerät aufweist:
- Mittel zum Erhalten durch den gesicherten Verarbeitungsprozessor mindestens einer Dateneinheit, die für ein Zahlungsmittel repräsentativ ist, das verwendet wird, um eine Transaktion durchzuführen, die Dateneinheit des Zahlungsmittels genannt wird,
- Mittel zum Anonymisieren der Dateneinheit des Zahlungsmittels durch den gesicherten Verarbeitungsprozessor, die eine aktuelle anonyme Identifikations-Dateneinheit liefern,
- Mittel zum Übertragen der aktuellen anonymen Identifikations-Dateneinheit an eine Anwendung zum Verarbeiten von Kundenbindungsdaten des Zahlungsendgeräts, wobei die Anwendung zum Verarbeiten von Kundenbindungsdaten von dem allgemeinen Verarbeitungsprozessor des Zahlungsendgeräts ausgeführt wird.

9. Computerprogrammprodukt, das von einem Kommunikationsnetz herunterladbar ist und/oder auf einem computerlesbaren Aufzeichnungsmedium gespeichert ist, **dadurch gekennzeichnet, dass** es Programmcodeanweisungen für das Ausführen eines Verfahrens zum Verarbeiten von Transaktionsdaten nach Anspruch 1 aufweist, wenn es auf einem Zahlungsendgerät nach Anspruch 8 ausgeführt wird.

## Claims

1. Method for processing at least one piece of payment means data, a method implemented within a payment terminal comprising a secured processor, a secured processing memory and a general-purpose processor, method **characterized in that** it comprises:
- a step for obtaining at least one piece of data representing a payment means used to carry out a transaction, called a piece of payment means data;
- a step for anonymizing said piece of payment means data, delivering a piece of current anonymous identification data;
- a step for transmitting said piece of current anonymous identification data to an application for processing loyalty data of said payment terminal, said application for processing loyalty data being executed by the general-purpose processor of the payment terminal.

2. Method for processing according to claim 1, **characterized in that** the step for transmitting said piece of anonymous identification data to the application for processing loyalty data is accompanied by the transmission of a piece of data representing a transaction amount.

3. Method for processing according to claim 1, **characterized in that** the step for anonymizing said piece of payment means data comprises:
- a step of application, by the secured processor, of a hash processing operation; and
- an optional step of application, by the secured processor, of a cryptographic processing operation.

4. Method for processing according to claim 1, **characterized in that** it comprises the processing of loyalty data by the application for processing loyalty data, said processing comprising:
- a step of searching, within a data structure, for a piece of reference anonymous identification data corresponding to the piece of current anonymous identification data; and
- when said step of searching delivers a positive result, a step for updating a piece of loyalty data associated with the piece of current anonymous identification data;
- when the step of searching delivers a negative result, a step of creation, within the data structure, of a piece of loyalty data associated with the piece of current anonymous identification data.

5. Method for processing according to claim 1, **characterized in that** it comprises a step for transmitting loyalty data comprising:
- a step of transmission, to the secured processor, of the piece of current anonymous identification data and of at least one piece of data representing loyalty;
- a step of creation, by the secured processor, of a container comprising a container identifier and data derived from the piece of current anonymous identification data and from said at least one piece of data representing loyalty;
- a step of transmission of said container to a communications terminal.

6. Method for processing according to claim 5, **characterized in that** said step of transmission of loyalty data comprises:
- a step of reception, from the communications terminal, of a piece of data for identifying said communications terminal; and
- a step of updating a recording of a loyalty data structure associated with the piece of current anonymous identification data, comprising the association of the piece of data for identifying said communications terminal with the piece of current anonymous identification data.

7. Method for processing according to claim 1 **characterized in that** it further comprises, subsequently to the step of transmission of the piece of current anonymous identification data, a step for printing out a payment receipt comprising at least one piece of loyalty data.

8. Payment terminal of the type comprising a secured processor, a secured processing memory and a general-purpose processor, terminal **characterized in that** it comprises:
- means for obtaining at least one piece of data representing a payment means used to carry out a transaction, called a piece of payment means data;
- means for anonymizing said piece of payment means data, delivering a piece of current anonymous identification data;
- means for transmitting said piece of current anonymous identification data to an application for processing loyalty data, to an application for processing loyalty data of said payment terminal, said application for processing loyalty data being executed by the general-purpose processor of the payment terminal.

9. Computer program product downloadable from a communications network and/or stored on a medium readable by computer, **characterized in that** it comprises program code instructions for executing a method for processing transactional data according to claim 1, when it is executed on a payment terminal according to claim 8.
